# DEMANDE DE BREVET EUROPEEN

(11) **EP 2 477 020 A1**
(43) Date de publication de la demande: **18.07.2012**
(21) Numéro de dépôt: 11151135.8
(22) Date de dépôt: 17.01.2011
(51) Int. Cl.: G01M 3/28, F17D 5/02

(54) **Système de détection de fuite de fluide.**

(71) Demandeur: CLEVERGAS HOLDING S.A., 1380 Ohain (BE)
(72) Inventeur: BOURGEOIS, Pierre, 1380 Ohain (BE)
(74) Mandataire: Vandeberg, Marie-Paule L.G.

(57) **Abrégé**

Un système de détection de fuite de fluide (14) pour une installation domestique de distribution de fluide (1), comprenant: une conduite principale (9) d'amenée de fluide reliée à au moins un équipement consommateur (13) de fluide par l'intermédiaire d'une conduite secondaire (11), une vanne de coupure (1 5) apte à couper la conduite principale (9) d'amenée en cas de détection de toute fuite, un dispositif de détection de petite fuite (16) activé en cas de consommation globale nulle, un débitmètre (25) sur la conduite secondaire de chaque équipement consommateur (13) permettant d'établir l'état de la consommation globale.

## Description

### Domaine de l'invention

L'invention se rapporte à un système de détection de fuite de fluide pour installation domestique de distribution de fluide.

### Introduction

Détecter des fuites de fluide le plus tôt possible permet de limiter au maximum les pertes humaines, matérielles et financières qui peuvent en résulter.

Ce problème est particulièrement sensible dans le cas du gaz combustible dont l'accumulation dans une enceinte fermée augmente le risque d'explosion. Afin de rassurer les consommateurs domestiques, les entreprises distributrices de gaz cherchent à équiper les installations domestiques de systèmes de détection de fuite de gaz à la fois simples, économiques, fiables, rapides et efficaces, ce qui permet par ailleurs de stimuler la consommation de gaz dans la population et de mieux rentabiliser leurs équipements.

### État de la technique

On connaît des systèmes de détection de fuite de fluide variés dans l'art antérieur.

Dans le domaine de la détection de gaz par exemple, il existe des appareils analyseurs « renifleurs » portables ou fixes. Les premiers présentent l'inconvénient de nécessiter une présence humaine. Les seconds sont désavantageux car ils peuvent se trouver éloignés de la fuite et donc réagir tardivement, voire ne jamais réagir, ce qui donne à l'utilisateur une fausse impression de sécurité.

D'autres systèmes de détection de fuite de fluide sont basés notamment sur la détection d'un débit de fuite. Des exemples de ces systèmes sont donnés ci-après. Ils fonctionnent tous en cas d'absence de consommation du fluide.

Le document US 5269171 concerne un appareil de détection de fuite d'un gaz, qui peut être du propane ou du gaz naturel. Lorsque le technicien veut effectuer un test de fuite de gaz sur une installation distributrice de gaz, il ferme d'abord la vanne d'alimentation et raccorde ensuite un débitmètre au moyen de flexibles de part et d'autre de cette vanne. Le gaz peut alors s'écouler en contournant celle-ci. Il s'agit donc ici d'un contrôle requérant une intervention humaine.

Les quatre documents suivants concernent des systèmes de détection de fuite automatiques.

GB 2231697 porte sur un dispositif de détection de fuite d'un fluide, en particulier de l'eau, monté dans une conduite verticale. En cas d'absence de consommation, cette conduite est obturée par gravitation par une vanne principale. L'étanchéité du système de distribution peut alors être vérifiée en permettant à l'eau de s'écouler, en cas de fuite, à travers une deuxième vanne placée en dérivation de la première. Au cas où la fuite persiste au-delà d'une période prédéterminée, une vanne de coupure est activée.

JP 61148339 divulgue un dispositif de détection de fuite dans un réseau de distribution d'air comprimé destiné à alimenter une vanne pneumatique. Lorsque celle-ci n'est pas activée, une vanne d'isolement placée sur la conduite d'alimentation principale est fermée périodiquement afin de permettre à l'air comprimé de s'écouler à travers un débitmètre placé en dérivation de la conduite d'alimentation principale.

JP 56138232 concerne un moyen de contrôle de fuite de fluide à distance. Une vanne à 3 voies alimente, dans l'une de ses configurations, une conduite principale menant à un consommateur. Lorsque celui-ci ne consomme pas, la vanne se met dans une autre configuration permettant au fluide de traverser un détecteur de fuite magnétique apte à émettre un signal vers un circuit de contrôle. Celui-ci coupe la vanne en cas de détection de fuite.

WO 2006 1 338892, qui peut être considéré comme l'état de la technique le plus proche, porte sur un système de détection de fuite de gaz naturel fonctionnant en l'absence de toute consommation. Une fuite éventuelle est détectée en détournant le gaz, par une vanne à trois voies, vers un capteur de vitesse d'écoulement ultrasensible monté en dérivation par rapport à la conduite principale. Les périodes d'absence de consommation sont prédéterminées et sont obtenues soit pendant la nuit, soit par coupure de tous les équipements consommateurs.

### Résumé de l'invention

Un but de l'invention est de procurer, pour une installation domestique de distribution de fluide, un système automatique de détection de fuite de fluide apte à détecter à tout moment une fuite de fluide de façon fiable et à réagir avec un court temps de réponse.

Un autre but est de ne pas perturber le fonctionnement des équipements consommateurs.

A cette fin, le système de détection de fuite de fluide selon l'invention comprend une conduite principale d'amenée de fluide reliée à au moins un équipement consommateur de fluide par une conduite secondaire correspondante et un moyen de commande apte à générer un signal en cas de détection de fuite. Une vanne de coupure permet de couper la conduite principale d'amenée du fluide. Un dispositif de détection de petite fuite comprend un détecteur de débit apte à détecter de petites fuites de fluide et à émettre un signal correspondant vers le moyen de commande, monté dans une conduite de by-pass branchée sur la conduite principale d'amenée, de part et d'autre d'une vanne de by-pass située sur la conduite principale d'amenée. La vanne de by-pass est contrôlée par le moyen de commande et comprend une position d'ouverture permettant le passage par la conduite principale du fluide vers l'au moins un équipement consommateur, et une position de fermeture dérivant le fluide vers la conduite de by-pass à travers le détecteur de petite fuite, en cas de consommation globale nulle des équipements consommateurs. Un moyen de gestion est apte à établir l'état de la consommation globale. Un débitmètre apte à émettre un signal de débit vers le moyen de gestion est placé sur la conduite secondaire de chaque équipement consommateur.

L'avantage de l'invention est que le système de détection est apte à établir à tout moment l'état de la consommation globale et à réagir rapidement en fonction de celui-ci grâce aux automaticités (débitmètres, moyens de commande et de gestion, vanne de by-pass) pour lancer éventuellement, sans devoir couper aucun équipement consommateur, une détection de petite fuite et ensuite, en cas de fuite, émettre un signal.

Dans la description ci-après, on distinguera les fuites à faible débit (qui se présentent typiquement au droit de joints défectueux ou mal serrés etc.) que l'on appellera « petite fuite ». Pour fixer les idées, une fuite de fluide est considérée dans la présente demande comme « petite fuite » si elle présente un ordre de grandeur de 1 à 50 l/h. On distinguera également les «fuites importantes » survenant typiquement lors de la rupture totale ou partielle d'une canalisation et présentant un ordre de grandeur de 50 à 6000 l/h.

Le débitmètre de chaque équipement consommateur est situé avantageusement à proximité immédiate de cet équipement notamment afin d'éviter qu'une fuite dans un tronçon de conduite secondaire compris entre le débitmètre et l'équipement correspondant ne soit interprétée par le système comme une consommation « normale ».

Le système de détection de fuite selon l'invention comprend de préférence également un dispositif de détection de fuite importante. Celui-ci comprend par exemple un débitmètre sur la conduite principale d'amenée de fluide et apte à émettre un signal de débit global d'amenée vers le moyen de gestion, ledit moyen de gestion établissant l'existence d'une fuite importante lorsque la différence entre la somme des débits consommés et le débit global d'amenée excède une valeur prédéterminée. En variante ou en complément, le dispositif de détection de fuite importante comprend au moins un capteur de pression apte à émettre un signal de pression vers le moyen de gestion. Celui-ci est à même de comparer les mesures de pression et de débit avec des courbes de référence préstockées et d'établir l'existence d'une fuite importante lorsqu'au moins un point de fonctionnement de l'installation s'écarte de façon significative desdites courbes de référence.

L'au moins un capteur de pression est situé avantageusement sur la conduite principale d'amenée et/ou sur chaque conduite secondaire, une répartition de ces capteurs sur l'ensemble de l'installation domestique favorisant particulièrement la vitesse de réaction du système de détection de fuite de fluide indépendamment de l'endroit de la fuite. L'au moins un capteur de pression peut se trouver plus particulièrement à proximité de chaque équipement consommateur de sorte qu'une fuite importante à cet endroit soit détectée très rapidement.

Selon une autre forme de réalisation préférée, le moyen de gestion est apte à comparer le débit consommé par chaque équipement consommateur avec une courbe de consommations caractéristique préstockée et à établir l'existence d'une consommation anormale lorsqu'au moins un de ces débits excède de façon significative la valeur correspondante sur la courbe de consommations caractéristique préstockée.

Avantageusement, le moyen de gestion est apte à corréler les mesures des différents appareils en vue de détecter une anomalie de calibrage et d'y remédier.

Le moyen de commande est de préférence apte à émettre un signal d'alarme ou de fermeture de la vanne de coupure en cas de détection tant de petite fuite que de fuite importante. De façon préférentielle le signal d'alarme est doublé de ce signal de fermeture pour des raisons de confort et de sécurité.

Le système de détection de fuite selon l'invention peut être utilisé dans le cas de fluides tels qu'un gaz combustible dont le gaz naturel, un gaz non combustible etc.

### Brève description des figures

Ces aspects ainsi que d'autres aspects de l'invention seront clarifiés dans la description détaillée de modes de réalisation particuliers de l'invention, référence étant faite aux figures annexées, dans lesquelles :
- Fig.1: est une vue schématique d'une installation domestique typique suivant l'art antérieur;
- Fig.2: est un exemple de diagrammes de consommation individuelle et globale d'équipements domestiques typiques;

- Fig.3: est une vue schématique d'une forme de réalisation du système de détection de fuite selon l'invention.

Généralement, des éléments semblables sont dénotés par des références identiques dans les figures.

### Description détaillée d'un mode de réalisation particulier

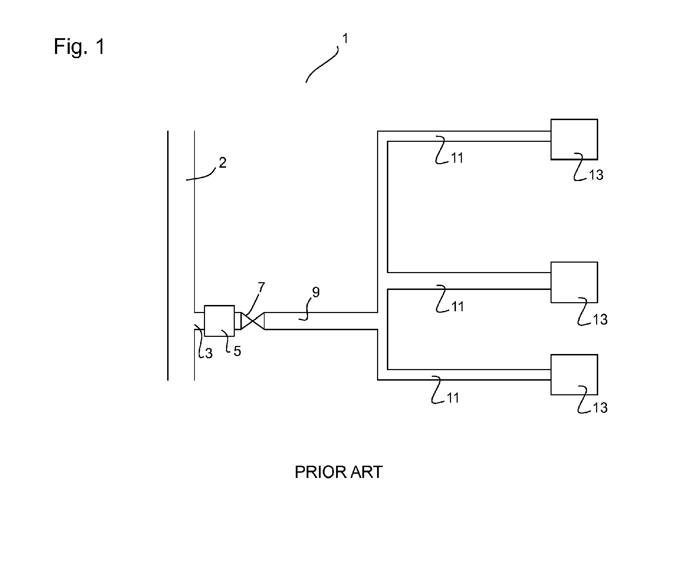

La Fig. 1 représente une installation typique 1 de distribution de gaz combustible. Le gaz est amené par une conduite publique 2 vers un branchement domestique 3. Un compteur 5 comptabilise la consommation au début du branchement domestique 3. Ce compteur est suivi d'une vanne principale manuelle 7 commandant l'ouverture de l'installation domestique 1. Un réseau de distribution domestique comprend une conduite principale 9 débouchant sur une pluralité de conduites secondaires 11 destinées à alimenter chacune un équipement consommateur 1 3.

Chaque équipement consommateur 13 ne fonctionne évidemment pas en permanence mais présente un cycle de fonctionnement T cycle tel que T cycle = T on + T off, T on et T off signifiant respectivement une période de fonctionnement et une période de non-fonctionnement de l'équipement 13. Ce cycle est généralement largement inférieur à 24 heures et varie notamment en fonction de la température externe. Chaque cycle est indépendant des autres car il n'y a aucune corrélation entre eux.

D'autre part, il est possible d'obtenir plusieurs périodes durant une journée (24 heures) pendant lesquelles l'ensemble des équipements consommateurs 13 ne consomment pas de gaz, ces périodes étant appelées périodes OFF.

Cette possibilité est réaliste si on considère des équipements consommateurs 13 tels qu'une chaudière générale, un chauffe-eau sans veilleuse (ce qui est bénéfique pour l'environnement), une cuisinière, un feu ouvert d'agrément, etc.

Par ailleurs, on nomme des périodes ON les périodes durant lesquelles au moins un équipement consommateur 1 3 fonctionne.

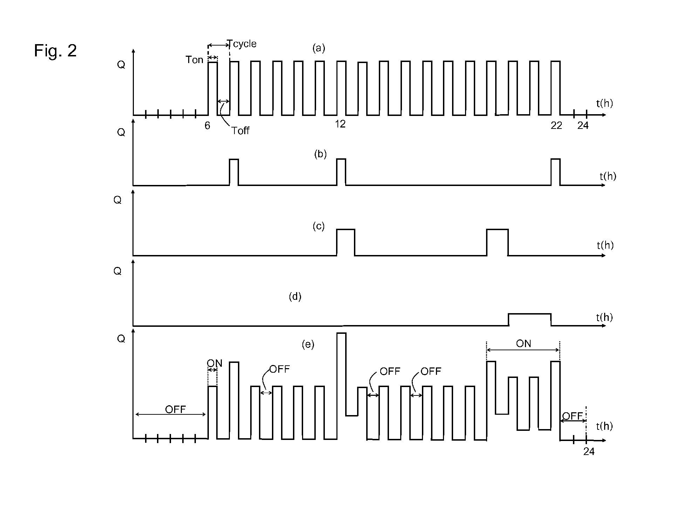

Des exemples de cycles de fonctionnement sont repris à la Fig.2 dans laquelle les graphiques (a), (b), (c) et (d) illustrent respectivement la consommation Q en gaz de la chaudière, du chauffe-eau, de la cuisinière et du feu ouvert précités. Le graphique (e) représente le débit consommé par l'ensemble de ces équipements. Ainsi, par exemple : la chaudière présente un cycle assez régulier de quelques dizaine de minutes avec une période de fonctionnement ne représentant qu'un pourcentage de ce cycle, pourcentage pouvant évoluer entre 0 et une valeur significativement inférieure à 100% ; le chauffe-eau fonctionne plusieurs fois par jour de quelques minutes à quelques dizaines de minutes ; la cuisinière fonctionne au moment de la préparation des repas deux fois à trois fois par jour, de quelques minutes à quelques heures suivant le type de plat préparé ; le feu ouvert fonctionne quelques heures par jour.

Dès lors, il apparaît clairement que pour l'installation domestique 1, les périodes OFF où l'ensemble des équipements consommateurs 13 sont à l'arrêt se présentent plusieurs fois par jour et ce de façon répartie irrégulièrement dans le temps.

On notera que l'invention peut être utilisée aussi bien pour la détection de fuites dans un seul ménage que pour un immeuble à appartement, etc. En conséquence, « équipement consommateur » peut être compris dans la présente demande non seulement comme un appareil particulier tel qu'une chaudière mais aussi comme l'ensemble des équipements domestiques d'un appartement.

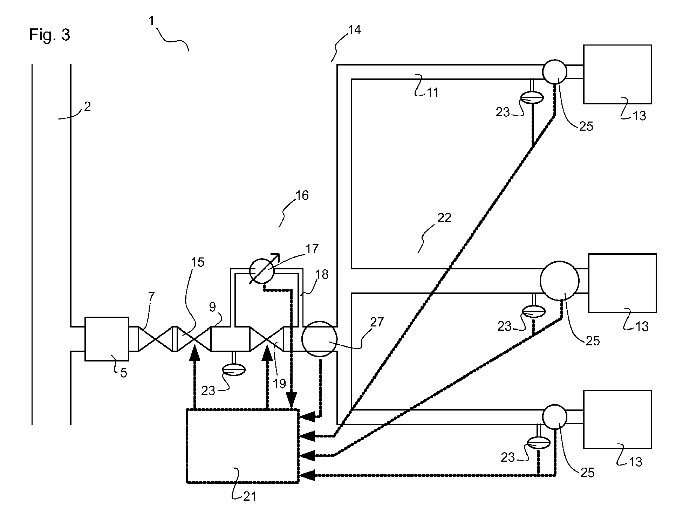

Un système de détection de fuite 14, intégré à l'installation de la Fig. 1, est illustré à la Fig.3. Il comprend : une vanne de coupure automatique 1 5 (distincte de la vanne 7) ; un dispositif de détection de petite fuite 16 comprenant un détecteur de débit 17, une conduite de by-pass 18 et une vanne de by-pass 19 ; un dispositif de détection de fuite importante 22 comprenant des capteurs de pression 23 et un débitmètre global 27 ; des moyens de commande et de gestion 21 ; des débitmètres 25 en amont de chaque équipement consommateur 13.

Le système de détection de fuite de gaz 14, placé le plus près possible du compteur, est conçu pour détecter toute fuite de gaz, petite ou importante, dans une installation domestique 1, pratiquement depuis le compteur 5 jusqu'aux équipements consommateurs 13. Lorsqu'une fuite est détectée, un signal est émis vers le moyen de commande 21, qui coupe, le cas échéant, la distribution du gaz à tous les équipements consommateurs 13 en activant la fermeture de la vanne de coupure 15.

Le dispositif de détection de petite fuite 16 fonctionne sur base d'une mesure de débit dans le by-pass (débit nul = pas de fuite, débit non nul = petite fuite) par le détecteur de débit 17. Celui-ci est placé sur la conduite de by-pass 18 afin de ne pas perturber la distribution de gaz lorsqu'au moins un équipement 13 consomme. Ce débit (nul ou non-nul) est mesuré lorsque l'ensemble des consommateurs est à l'arrêt. Comme chaque équipement consommateur suit un cycle de consommation se décomposant en deux types de périodes (voir plus haut), l'appareillage détecte (courbe e de la Fig. 2) les périodes d'arrêt communes, durant lesquelles tous les équipements consommateurs 13 sont simultanément à l'arrêt.

Le dispositif de détection de fuite importante 22 fonctionne par contre selon un mode double (mesures de pression et de débit). A cet effet les débits sont mesurés par les équipements 25 et 27. Le dispositif 22 comprend également des capteurs de pression 23, prévus aux extrémités de l'installation 1. Ces mesures de débit et de pression permettent de détecter rapidement, (intervalle de l'ordre de quelques secondes), une fuite importante indépendamment du cycle ON/OFF de l'ensemble des équipements consommateurs 13. Cette détection est basée sur la vérification de la cohérence entre les débits et pressions aux différents points de mesure.

Les moyens de commande et de gestion 21 (généralement électroniques, du fait de leur rapidité de réaction) assurent respectivement la commande et la gestion de l'ensemble du système 14, en coordonnant les différents composants du système 14 (capteurs 23, vannes 15 et 19, débitmètres 25 et 27...) d'un point de vue électrique, timing, synchronisation, prise de décision et coupure éventuelle.

Le détail de la détection d'une petite fuite est décrit plus en détail ci-après. Lorsque le système de détection 14 effectue la mesure de la petite fuite, par définition, l'ensemble des équipements consommateurs 13 est à l'arrêt et leur consommation globale est donc nulle. La vanne de by-pass 19 est alors basculée en position fermée, ce qui dérive le gaz vers la conduite de by-pass 18, sur laquelle le détecteur de petite fuite 17 est monté. Le détecteur de petite fuite 17 est donc en mesure de détecter en continu le débit d'une éventuelle fuite, et tant qu'il n'y a pas de fuite ou que la fuite est inférieure au seuil de sensibilité du capteur, le détecteur 17 n'active rien et poursuit sa mesure. Dès qu'une (petite) fuite apparaît, le détecteur 17 la détecte par une mesure de débit. Il active aussitôt une alarme. Il peut aussi, en variante ou en complément, actionner la vanne de coupure 15 afin d'interrompre la distribution. Le détecteur de fuite 17 permet de mesurer des débits très faibles, correspondant à des fuites qui seraient passées inaperçues par un système classique. Ce détecteur 17 bénéficie bien sûr donc d'une sensibilité significativement plus élevée que les débitmètres mesurant une consommation tels que le compteur 5 ou les débitmètres 25 situés à proximité des équipements consommateurs 13.

La mise en marche de l'un quelconque des équipements consommateurs 13 interrompt automatiquement la mesure. Le moment de cette remise en marche n'est en effet pas prédictible ni synchronisé d'une quelconque manière avec le système de détection 14. Néanmoins, grâce aux débitmètres 25 placés à proximité des équipements consommateurs 13, le système de détection 14 est averti de ce redémarrage de la consommation et ouvre aussitôt la vanne de by-pass 19, autorisant le passage du gaz dans la conduite principale 9, dont la section est compatible avec un fort débit de consommation. Le temps de réaction du système de détection doit évidemment être compatible avec les contraintes de l'équipement consommateur 13 quant aux conditions de démarrage de ce dernier, notamment du point de vue de la chute de pression dans les conduites 9 et 11. Simultanément à l'ouverture de la vanne de by-pass 19, la mesure de la fuite par le détecteur de fuite 17 est inactive, aussi longtemps qu'au moins un équipement consommateur 13 fonctionne et elle ne reprend que lorsqu'une nouvelle période de non consommation (période OFF) se présente.

Cette période de non consommation est détectée par la mesure du débit consommé par chaque équipement 13 via les débitmètres 25. Le débitmètre 25 est choisi de façon à présenter une sensibilité compatible avec le débit minimum de l'équipement 13 correspondant, tout en permettant le passage du gaz dans ce dernier lorsqu'il est à son débit maximum. Il doit aussi provoquer une perte de charge négligeable.
Lorsque la condition « absence totale de consommation » est à nouveau remplie, un nouveau cycle de mesure de petite fuite peut redémarrer et le système de détection de fuite 14 ferme la vanne de by-pass 19.

Par ailleurs, comme la détection de petite fuite est activée par un signal constatant une absence totale de consommation, celle-ci devrait être établie de façon rigoureuse. A cette fin, le moyen de gestion 21 est choisi de façon à distinguer (discriminer) sans ambiguïté, pour chaque équipement consommateur 13, une absence de consommation (= consommation nulle) de sa consommation minimum, en dépit d'erreurs de mesure possibles générées par le débitmètre 25 correspondant. Dans le cas, par exemple, d'une cuisinière présentant une consommation minimale de l'ordre de 50 l/h, le moyen de gestion 21 doit pouvoir distinguer sans ambiguïté cette consommation minimale de la consommation nulle, eu égard notamment à une possible erreur de décalage du zéro réel (en anglais « offset error ») du débitmètre 25 de l'ordre de 10 l/h. Le moyen de gestion 21 se base, pour établir la consommation nulle de la cuisinière, sur un seuil de discrimination qui sera compris entre 50 l/h et 10 l/h, par exemple 30 l/h, valeur 'médiane' permettant de conserver une marge d'erreur due au bruit de mesure et à d'autres incertitudes. Toute valeur mesurée sur le débitmètre 25 inférieure à 30 l/h serait alors interprétée par le moyen de gestion 21 comme une absence de consommation de la cuisinière.

La correction régulière de l'erreur d'offset pendant un recalibrage en période de mesure de petite fuite permet de limiter la dérive dans le temps (sur plusieurs mois, voire plusieurs années) de cette erreur et donc de conserver un seuil de discrimination acceptable par rapport aux marges fixées au début de la mise en service du débitmètre 25. En effet, si le détecteur de petite fuite 17 indique qu'il n'y a pas de fuite, un ajustement du niveau zéro des débitmètres 25 peut être appliqué.

D'autre part, lorsque la vanne de by-pass 18 est ouverte afin de permettre l'alimentation en gaz des équipements consommateurs 13, aucun débit de gaz ne passe dans le détecteur de débit 17 du fait de son faible diamètre. Ainsi une correction d'une dérive du zéro du détecteur 17 peut être effectuée durant chaque période ON, ce qui permet au détecteur 17 de conserver en permanence toute sa sensibilité.

La détection des fuites importantes est détaillée ci-après.

Fonctionnant selon un mode double (mesures de pression et de débit) comme montré à la Fig. 3, le dispositif de détection de fuite importante 22 accroît sa fiabilité et donc la sécurité car il génère un signal d'alarme ou de coupure de l'installation 1 au cas où les mesures de pression seraient incompatibles avec les mesures de débit, indiquant ainsi un mauvais fonctionnement de l'appareillage ou de l'installation. Afin de vérifier une telle anomalie, les mesures de pression sont corrélées en début d'utilisation avec les débits, ces corrélations donnant lieu à un profil de pression de référence qui est mémorisé et, le cas échéant, soumis par la suite à un « apprentissage » du système. Les mesures de pression/débit permettent de détecter une anomalie dans l'installation domestique de distribution 1 lorsque le point de fonctionnement correspondant s'écarte de façon significative d'un profil de référence.

Par ailleurs, durant les mesures de petite fuite, en période de consommation nulle, les pertes de charge sont quasi nulles et un recalibrage de l'ensemble des capteurs de pression 23 peut être réalisé, la pression étant sensiblement la même partout dans l'installation de distribution 1.

La sensibilité demandée pour cette détection de fuite importante étant significativement plus faible que pour la mesure des petites fuites, le principe de détection proposé correspond à ce niveau de sensibilité. Les mesures de débits et de pressions précitées s'effectuant indépendamment de l'état de fonctionnement des équipements consommateurs 13, le dispositif de détection de fuite importante 22 est donc actif en permanence. Il répond donc quasi instantanément (typiquement en quelques secondes) à l'apparition d'une fuite importante en fermant la vanne de coupure 15, ce qui met l'installation 1 en un mode de sécurité.

Le système de détection de fuite 14 peut également détecter une consommation anormale, due par exemple à une fuite importante au niveau d'un équipement consommateur 13 ou à une panne de celui-ci, en recourrant à des profils ou courbes de consommations caractéristiques des différents équipements consommateurs 13 préalablement stockés dans son moyen de gestion 21. Un excès ou défaut de consommation prédéterminé par rapport à ces courbes est interprété par le moyen de gestion 21 comme une anomalie et donne lieu à un signal d'avertissement ou de coupure de l'installation de distribution 1.

Des modes de consommation « typiques » de certains équipements 13 sont esquissés ci-après : Une chaudière fonctionne davantage en hiver qu'en été. Sa consommation hivernale est assez régulière d'un jour à l'autre, sauf en cas de brusques variations de température. Par ailleurs, une cuisinière fonctionne généralement avant les heures de repas et pas plus de quelques heures d'affilée. Un feu ouvert d'agrément fonctionne surtout en soirée, etc.

Les profils de consommation précités peuvent faire l'objet d'un apprentissage évolutif ou être adaptés par l'utilisateur à ses habitudes de consommation.

En cas de détection d'une consommation anormale, le moyen de commande 21 émet de préférence un signal d'alarme et/ou de coupure de l'installation 1.

Il découle de ce qui précède que le système de détection de fuite de gaz 14 permet de détecter une fuite de gaz de n'importe quelle ampleur dans une installation domestique pratiquement depuis le compteur jusqu'aux équipements consommateurs et de prendre les actions efficaces de mise en sécurité de l'installation dans des délais compatibles avec l'importance de la fuite.

La détection de fuite reposant sur deux principes permet respectivement de détecter tant des petites fuites que des fuites importantes dans des délais compatibles avec ces deux types de fuites.

La détection des fuites importantes est continue et indépendante de l'état de fonctionnement ON/OFF des équipements consommateurs. Le temps de réaction y est donc très court, ce qui est compatible avec le danger lié aux fuites importantes.

Par contre la détection des petites fuites, nécessitant une mesure très fine et sensible d'un débit quasi nul, n'est effectuée que durant des périodes permettant cette mesure, c'est-à-dire durant les périodes OFF de l'ensemble des équipements consommateurs 13. La détection n'est donc pas continue. Néanmoins, vu le faible débit de ce type de fuite, le temps de réaction reste compatible avec les normes de sécurité.

De ce qui précède il résulte aussi qu'aucun équipement consommateur n'est coupé pendant la mesure d'une fuite, qu'elle soit petite ou importante, ce qui est avantageux en termes de confort.

Il apparaîtra évident pour l'homme du métier que la présente invention n'est pas limitée à l'exemple illustré et décrit ci-dessus. L'invention comprend chacune des caractéristiques nouvelles ainsi que leur combinaison. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec un mode de réalisation spécifique, qui a une valeur purement illustrative et ne doit pas être considéré comme limitatif.

## Revendications

1. Système de détection de fuite de fluide (14) pour installation domestique de distribution de fluide (1), comprenant une conduite principale (9) d'amenée de fluide reliée à au moins un équipement consommateur (13) de fluide par une conduite secondaire (11) correspondante, un moyen de commande (21) apte à générer un signal en cas de détection de fuite, une vanne de coupure (1 5) permettant de couper la conduite principale (9) d'amenée, un dispositif de détection de petite fuite (16) comprenant un détecteur de débit (17) apte à détecter de petites fuites de fluide et à émettre un signal correspondant vers le moyen de commande (21), monté dans une conduite de by-pass (1 8) branchée sur la conduite principale (9) d'amenée, de part et d'autre d'une vanne de by-pass (19) située sur la conduite principale (9), la vanne de by-pass (19) étant contrôlée par le moyen de commande (21) et comprenant une position d'ouverture permettant le passage par la conduite principale (9) du fluide vers l'au moins un équipement consommateur (13) et une position de fermeture dérivant le fluide vers la conduite de by-pass (18) à travers le détecteur de petite fuite (17), en cas de consommation globale nulle, **caractérisé en ce qu'**il comprend en outre un moyen de gestion (21) apte à établir l'état de la consommation globale et un débitmètre (25) sur la conduite secondaire (11) de chaque équipement consommateur (13), apte à émettre un signal de débit vers le moyen de gestion (21).

2. Système de détection selon la revendication 1, **caractérisé en ce que** le débitmètre (25) est situé à proximité immédiate de l'équipement consommateur (13) correspondant.

3. Système de détection selon la revendication 1 ou 2, **caractérisé en ce qu'**il comprend en outre un débitmètre (27) sur la conduite principale (9) d'amenée de fluide et apte à émettre un signal de débit global d'amenée vers le moyen de gestion (21), ledit moyen de gestion établissant l'existence d'une fuite importante lorsque la différence entre la somme des débits consommés et le débit global d'amenée excède une valeur prédéterminée.

4. Système de détection selon l'une quelconque des revendications précédentes, **caractérisé en ce qu'**il comprend en outre au moins un capteur de pression (23) apte à émettre un signal de pression vers le moyen de gestion (21) qui est à même de comparer les mesures de pression et de débit avec des courbes de référence préstockées et d'établir l'existence d'une fuite importante lorsqu'au moins un point de fonctionnement de l'installation 1 s'écarte de façon significative desdites courbes de référence.

5. Système de détection selon la revendication 4, **caractérisé en ce que** l'au moins un capteur de pression (23) est situé sur la conduite principale (9) d'amenée.

6. Système de détection selon l'une quelconque des revendications 4 ou 5, **caractérisé en ce que** l'au moins un capteur de pression (23) est situé sur chaque conduite secondaire (11).

7. Système de détection selon la revendication 6, **caractérisé en ce que** l'au moins un capteur de pression (23) est situé en outre à proximité de l'au moins un équipement consommateur (13).

8. Système de détection selon l'une quelconque des revendications précédentes, **caractérisé en ce que** le moyen de gestion (21) est apte à comparer le débit consommé par chaque équipement consommateur (13) avec une courbe de consommations caractéristique préstockée et à établir l'existence d'une consommation anormale lorsqu'au moins un de ces débits est significativement supérieur ou inférieur à la valeur correspondante sur la courbe de consommations caractéristique préstockée.

9. Système de détection selon l'une quelconque des revendications précédentes, **caractérisé en ce que** le moyen de commande (21) est apte à émettre un signal d'alarme en cas de détection tant de petites fuites que de fuites importantes.

10. Système de détection selon l'une quelconque des revendications précédentes, **caractérisé en ce que** le moyen de commande (21) est apte à fermer la vanne de coupure (1 5) en cas de détection tant de petites fuites que de fuites importantes.

11. Système de détection de fuite de fluide selon l'une quelconque des revendications précédentes, **caractérisé en ce que** le moyen de gestion (21) est apte à corréler les mesures des différents appareils en vue de détecter une anomalie de calibrage et d'y remédier.

12. Système de détection selon l'une quelconque des revendications précédentes, **caractérisé en ce que** le fluide est un gaz combustible.

13. Système de détection selon la revendication 12, **caractérisé en ce que** le gaz combustible est du gaz naturel.
